# EUROPÄISCHE PATENTANMELDUNG

(11) **EP 2 423 266 A2**
(43) Veröffentlichungstag der Anmeldung: **29.02.2012**
(21) Anmeldenummer: 11179532.4
(22) Anmeldetag: 31.08.2011
(51) Int. Cl.: C09C 1/42, C01B 33/40

(54) **Kaolin mit reduziertem Gehalt phosphorhaltiger anorganischer Verbindungen, Herstellung und Anwendung**

(30) Priorität: 31.08.2010 DE 102010035997
(71) Anmelder: bene_fit Systems GmbH & Co. KG, 92242 Hirschau (DE)
(72) Erfinder: Kräuter, Reinhard, 92237 Sulzbach-Rosenberg (DE)
(74) Vertreter: Hannke, Christian

(57) **Zusammenfassung**

Die Erfindung betrifft ein Verfahren zur Reduzierung des Gehalts an Phosphor bzw. anorganischer phosphorhaltiger Verbindungen in Kaolin und/oder Kaolinit und/oder zur Gewinnung angereic herter anorganischer phosphorhaltiger Verbindungen aus Kaolin und/oder Kaolinit, wobei in einem ersten Verfahrensschritt ein Kaolin- und/oder Kaolinit-Rohmaterial mechanisch unter Aufwendung starker Scherkräfte mittels Extrusion, Delaminierung, Kavitation, Nassmahlung, Trockenmahlung, Attrition und/oder anderer Verfahren aufgearbeitet wird, und in einem darauffolgenden Verfahrensschritt mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion getrennt wird. Weiterhin betrifft die Erfindung ein Kaolin und/oder Kaolinit mit reduziertem Gehalt an Phosphor bzw. anorganischer phosphorhaltiger Verbindungen, wobei der Kaolin und/oder der Kaolinit aus einem phosphorhaltigem Kaolin- und/oder Kaolinit-Rohmaterial, bevorzugt einem Tonmineral und/oder einer Tonerde natürlichen Ursprungs durch einen mindestens zweistufigen Prozess herstellbar ist, wobei der Prozess eine mechanische Aufarbeitung unter Ausübung starker Scherkräfte, insbesondere durch Extrusion, Delaminierung, Kavitation, Nassmahlung, Trockenmahlung, Attrition und/oder andere Aufarbeitungen einschließt, und eine auf die mechanische Aufarbeitung folgende Trennung mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion umfasst.

## Beschreibung

Die Erfindung betrifft ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit, wobei in einem ersten Verfahrensschritt ein Kaolin- und/oder Kaolinit-Rohmaterial mechanisch unter Aufwendung starker Scherkräfte mittels Extrusion, Delaminierung, Kavitation, Nassmahlung, Trockenmahlung, Attrition und/oder anderer Verfahren aufgearbeitet wird, und in einem darauffolgenden Verfahrensschritt mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion getrennt wird.

Weiterhin betrifft die Erfindung ein Kaolin und/oder Kaolinit mit reduziertem Gehalt an Phosphor bzw. anorganischer phosphorhaltiger Verbindungen, wobei der Kaolin und/oder der Kaolinit aus einem phosphorhaltigem Kaolin- und/oder Kaolinit-Rohmaterial, bevorzugt einem Tonmineral und/oder einer Tonerde natürlichen Ursprungs durch einen mindestens zweistufigen Prozess herstellbar ist, wobei der Prozess eine mechanische Aufarbeitung unter Ausübung starker Scherkräfte, insbesondere durch Extrusion, Delaminierung, Kavitation, Nassmahlung, Trockenmahlung, Attrition und/oder andere Aufarbeitungen einschließt, und eine auf die mechanische Aufarbeitung folgende Trennung mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion umfasst.

Außerdem betrifft die vorliegenden Erfindung die Verwendung von Kaolin und/oder Kaolinit mit reduziertem Gehalt an Phosphor bzw. anorganischer phosphorhaltiger Verbindungen.

Schließlich betrifft die vorliegende Erfindung auch die Verwendung an phosphorhaltigen Verbindungen angereicherter Fraktion, insbesondere zur Isolierung und/oder Gewinnung von Selten-Erd-Elementen.

Kaolinit ist ein sehr häufig vorkommendes Mineral aus der Mineralklasse der Schichtsilikate und wird der Kaolinit-Serpentin-Gruppe zugeordnet. Es ist ein typischer Vertreter der Tonminerale und ein Verwitterungsprodukt des Feldspats.

Kaolin, wird vielfach auch als Porzellanerde oder Aluminiumsilikat bezeichnet. Es ist ein feines, eisenfreies, weißes Gestein, das als Hauptbestandteil Kaolinit enthält. Weitere Bestandteile sind verschiedene andere Tonminerale und Teile unzersetzten Feldspats. Wichtige Anwendungen für Kaolin liegen in der Papier- und Porzellanherstellung sowie in der Farbenindustrie.

In Deutschland befinden sich wichtige Abbaugebiete für Kaolin bei Hirschau in der Oberpfalz und in Lohrheim im Taunus. Kleinere Vorkommen werden im Westerwald sowie im mittelsächsischen Hügelland bei Seilitz, Kemmlitz und in Caminau abgebaut. Im osteuropäischen Umfeld wird Kaolin in Polen in Nowogrodziec (östlich von Görlitz) und in der Ukraine in Gluhivzi im großen Maßstab abgebaut. Tschechische Abbaugebiete befinden sich bei Skalná und Plesná in Nordböhmen. Die größten Kaolinproduzenten weltweit sind die USA, Brasilien, China, Australien, Ukraine, Usbekistan, England, Deutschland und Tschechien. Im Jahr 2003 stammten über zwei Drittel der Jahresproduktion aus diesen Ländern. Die größten Abbauunternehmen sind Imerys (F), CADAM/PPSA (Bra), Thiele (USA), BASF (USA) und Huber (USA).

Kaolinit hat eine Mohs'sche Härte von 2 bis 2,5, eine Dichte von 2,61 bis 2,68 g/cm³. Im Wasser wird das Mineral plastisch verformbar.

Kaolin gehört zu den hydratisierten Aluminiumsilikaten. Eine theoretische Summenformel ist Al₂Si₂H₄O₉ bzw.: Al₂O₃•2SiO₂•2H₂O. Kaolin ist ein weißes Pulver mit einer Dichte von etwa 2,58 [2,61-2,68] g/cm³. Es hat eine schichtartige, lamellare Struktur, in der sich Schichtfolgen von oktaedrischen Aluminat- und tetraedrischen Silikatschichten wiederholen, welche über Schichten von Sauerstoffatomen verbunden sind. Durch diese Schichtung ist die Plastizität (Verformbarkeit) vergleichsweise gering, jedoch resultiert dieser chemische Aufbau in einer hohen Feuerbeständigkeit. Die Mohssche Härte von Kaolin liegt bei 2,5. Beim Brennen bildet sich ein fester, dichter Scherben. Außerdem führt diese Struktur bevorzugt zu geringen Partikelgrößen. Seine Strichfarbe ist weiß. Durch Verunreinigungen kann die Farbe aber auch in den leicht rötlichen, bräunlichen oder bläulichen Bereich übergehen.

Kaolin ist das einzige weiße, technisch verfügbare Mineralpigment, das natürlich mit einer Partikelgröße von weniger als 2 µm vorkommt. Der Weißgrad der trockenen Reflexion liegt bei 82 % für ein grobes Kaolin und bei bis zu 87 % für ein feines Kaolin. Ein wasserfrei kalziniertes Kaolin kann einen Weißgrad über 91 % erreichen. Der Brechungsindex (n_{D}) beträgt 1,56. Ein typisches feines Kaolin hat einen kugeläquivalenten Partikeldurchmesser von 0,5 µm und einen Partikelanteil von 90 % unter zwei Mikrometer. Nach Sieben durch ein 325-Mesh-Sieb (325 Maschen pro Zoll) beträgt der Rückstand weniger als 0,01 %. Grobe Kaoline haben einen Äquivalentdurchmesser von 3,5 µm, so dass nach Sieben auf einem 325er Sieb 0,1 % Rückstand verbleiben. Jedoch liegt auch ein derartiges grobes Kaolin zu über 40 % in Partikelgrößen von weniger als 2 µm vor. Der Ölbedarf als Maß der relativen Oberfläche beträgt 32 g/100 g für ein grobes Kaolin und steigt über 45 g für 100 g feines auf 55 g für 100 g kalziniertes Kaolin an.

Kaolin wird gelegentlich auch als Bleicherde bezeichnet. Dies beruht auf der Eigenschaft des Kaolins, aufgrund seiner Struktur Verunreinigungen (z.B. färbende Substanzen) gut absorbierende zu können. Daher wird Kaolin in der Lebensmittelindustrie teilweise als Bleichmittel zugesetzt. Außerdem wird es als Trägerstoff und Trennmittel verwendet. Es ist in der EU als Lebensmittelzusatzstoff unter der Nummer E 559 für einige Lebensmittel und als Trägerstoff für Farbstoffe zugelassen. Kaolin wird vom menschlichen Darm nicht absorbiert, sondern unverändert wieder ausgeschieden. Die für derartige Anwendungen jeweils benötigten und eingesetzten Mengen Kaolin sind sehr gering und die Substanz gilt als unbedenklich.

Als Pigment und Füllstoff findet Kaolin beispielsweise Anwendung als weißes Pigment zur Herstellung von Streichfarben und Anstrichmitteln, bei der Papierherstellung als Füllstoff in der Masse und als Streichpigment für Beschichtungen. Im Kunststoff- oder Gummibereich wird Kaolin beispielsweise in Polyethylen (HDPE) als Füllstoff zur Verbesserung des Elastizitätsmoduls oder als Weichkaolin in der Reifenproduktion eingesetzt. Ferner dient Kaolin in der Kosmetik als Grundlage zur Herstellung von Puder oder auch als Grundstoff in der Farbstifterzeugung (Farbmine).

Die Kaolinherstellung erfolgt weltweit unabhängig von der ursprünglichen Lagerstätte nach ähnlichen aus dem Stand der Technik bekannten Grundprozessen, welche in Schutzrechten z.B. der oben genannten Firmen ausführlich beschrieben sind. Meist setzen diese sich aus einer Kombination einer oder mehrerer der nachfolgend genannten beispielhaften Verfahrensschritte zusammen, welche Abbau der Roherde, Suspendierung dieser in Wasser, Abtrennung grober Anteile, Abtrennung der Feinstoffe ggf. in verschiedene Fraktionen (trocken oder nass, z.B. mittels Zentrifuge oder Zyklon), gegebenenfalls Nass- oder Trockenmahlung, gegebenenfalls chemische und/der physikalische Weißgradverbesserung (oxidierende und/oder reduzierende Bleiche und/oder Magnetscheidung), ggf. weitergehende Reinigung durch Flotation, selektive Flockung, Fraktionierung, Flockung, Eindickung, Delaminierung, Extrusion oder Mahlung einschließt, wobei die Verfahrensschritte nicht auf diese Prozesse beschränkt sind. Entwässerung, Dispergierung, Granulierung, Mahltrocknung, Sprühtrocknung, Kalzinierung, Kurzzeitkalzinierung können zusätzliche Verfahrensschritte darstellen. Ferner kann eine Mischung mit anderen Komponenten wie z.B. Additiven, organischen oder anorganischen Aufhellern, anderen Kaolinen oder anderen Füllstoffen erfolgen.

Als Ergänzung können dem Kaolin vor, bei oder nach diesen Prozessschritten weitere anorganische oder organische Zusätze zugegeben werden, beispielsweise Silikate, Oxide, Carbonate, Sulfate, Phosphate, wie z.B. Calciumcarbonat, Quarz, Feldspat, Wollastonit, Apatit, Gips, Magnesit oder andere, jeweils einzeln oder in Mischungen. Daneben können weitere anorganische oder organische Additive zugegeben werden.

Einige Kaolinlagerstätten z.B. in Europa zeichnen sich durch einen erhöhten Gehalt phosphorhaltiger anorganischer Verbindungen aus. Es kann vorteilhaft sein, diese Verbindungen weitestgehend abzutrennen, entweder um die Reinheit des begleitenden Kaolins zu erhöhen oder um diese phosphorhaltigen Verbindungen in konzentrierter Form anderen oder neuen Anwendungen zuzuführen.

In der Tabelle 1 sind die chemische und physikalische sowie mineralogische Zusammensetzung phosphorhaltiger Kaoline im Sinne dieser Beschreibung dargestellt.

**Tabelle 1:**

| **Parameter** | **Einheit** | **Wert** |
|---|---|---|
| Al₂O₃ | Ma-% | <60 |
| SiO₂ | Ma-% | >20 |
| K₂O | Ma-% | <5 |
| Na₂O | Ma-% | <5 |
| TiO₂ | Ma-% | <5 |
| Fe₂O₃ | Ma-% | <5 |
| CaO | Ma-% | <5 |
| MgO | Ma-% | <5 |
| P₂O₅ | Ma-% | 0,01-4 |
| Glühverlust | Ma-% | >8 |
| Chem. Inhalt (ausser Al, Si, H, O), bevorzugt | Ma-% | <40 |
| Kaolinit, Mineralanteil meist bevorzugt | Ma-% | >60 |
| Korngröße 1, < 50 µm | Ma-% | >50 |
| Korngröße 1, < 50 µm, meist bevorzugt | Ma-% | >80 |
| Korngröße 2, < 50 µm | Ma-% | >50 |
| Korngröße 2, < 50 µm meist bevorzugt | Ma-% | >80 |
| Aspektverhältnis | | >1 |
| Aspektverhältnis meist bevorzugt | | >3 |
| Weißgrad, R 457 | % | >50 |
| Weißgrad, R 457 meist bevorzugt | % | >60 |
| BET | m²/g | >0,5 |
| BET, meist bevorzugt | m²/g | >2 |
| Morphologie, REM | | plättchenförmig |

| | | |
|---|---|---|
| Korngröße 1 = gemessen mittels Sedimentationsmethode, z.B. Sedigraph Korngröße 2 = gemessen mittels Laserbeugung, z.B. mittels Cilas | | |

Ein Teil dieser phosphorhaltigen anorganischen Verbindungen in Kaolinen, vor allem europäischer Kaoline und hier speziell deutscher Lagerstätten sowie die Mineralzusammensetzung dieser Kaoline wurden von H. M. Köster eingehend beschrieben, z.B.:
Köster H. (1969) Beitrag zur Geochemie der Kaoline. International Clay Conference, Tokyo, 274-280.
Köster H. (1969) Die spektralphotometrische Bestimmung der Spurenelemente Cr, Mn, Ni, Cu, Zn, Ga, Pb, und P neben den Hauptelementen bei der Silikatanalyse. Berichte der Deutschen Keramischen Gesellschaft 46(5), 247-253.
Köster H. (1974) Ein Beitrag zur Geochemie und Entstehung der Oberpfälzischen Kaolin-Feldspat-Lagerstätten. Geol. Rundschau 63(2), 655-689.
Köster H. and Kromer H. (1974) Übersicht zu den Kaolin- und Tonvorkommen in der Oberpfalz. Keramische Zeitschrift 26(9), 1-6.
Köster H. and Tillmann H. (1974) Kaolin- und Tonvorkommen in der Oberpfalz. Der Aufschluß 26, 286-306.
Kromer H. and Köster H. (1974) Clay and Kaolin deposits of Eastern Bavaria. Fortschr. Min. 52, 123-138.
Köster H. (1980) Kaolin deposits of Eastern Bavaria and the Rheinische Schiefergebirge (Rhenish Slate Mountains). Geol. Jb. D 39, 7-23.
Köster H. and Brandl M. (1991) Mineralogy and Geochemistry of Primary Kaolins and Related Kaolinitic Clays in NE-Bavaria. Euroclay.
Störr M., Köster H., Kromer H., and Hilz M. (1991) Minerale der Crandallit-Reihe im Kaolin von Hirschau-Schnaittenbach, Oberpfalz. Z. geol. Wiss 19(6), 677-683.

H.M. Köster kommt bei seinen Untersuchungen zu dem Ergebnis, dass phosphorhaltige anorganische Verbindungen, z.B. bei den Kaolinlagerstätten aus dem Hirschau-Schnaittenbacher Becken, vor allem als Crandallit, CaAl₃H(OH)₆(PO₄)₂ (bzw.: CaAl₃(PO₄)₂(OH)₅•(H₂O)) vorliegen. Dabei handelt es sich um schwerlösliche, komplex gebaute Phosphate, bei denen sich eine Auswahl an zwei- und dreiwertige Kationen mit ähnlichen lonenradien wie z.B. Aluminium und Eisen(III) gegenseitig in der Kristallstruktur vertreten. Die Minerale der Crandallit-Reihe entstehen bei der Verwitterung. Sie können eine ganze Reihe von Spurenelementen fixieren und immobilisieren. Phosphate verschiedener Zusammensetzung wurden mikroanalytisch identifiziert. Alle analysierten Phosphate enthalten neben Al in wechselnden Anteilen z.B. Ca, Sr, und/oder Ba.

Beispielsweise in der o.g. Veröffentlichung in der Zeitschrift für geologische Wissenschaften (Z. geol. Wiss 19(6), 677-683) kommt H.M. Köster zu dem Ergebnis, dass sich in Hirschau-Schnaittenbacher Kaolinen Kristallaggregate derartiger Mischverbindungen mit wechselnder chemischer Zusammensetzung finden lassen. Die Aggregate sind teils mit den Kaolinitkristallen verwachsen und/oder teils auf den Kaolinitoberflächen aufgewachsen. Eine mechanische Ttrennung vom Kaolin ist nicht möglich. Bei der Aufbereitung von Kaolinsuspensionen unter Einfluss eines Magnetfeldes (Magnetscheidung) gehen die Crandallitminerale nur zum Teil in die stärker eisenoxidhaltige Fraktion über.

Für spezielle Anwendungen von Kaolin, z.B. in Materialien der oben genannten Pigment- und Füllstoff- sowie die Lebensmittelindustrie, wäre es aber vorteilhaft, ein Kaolin mit einem reduzierten Gehalt phosphorhaltiger anorganischer Verbindungen zur Verfügung zu haben.

Die Aufgabe der vorliegenden Erfindung besteht daher darin, ein Kaolin mit reduziertem Gehalt phosphorhaltiger anorganischer Verbindungen bereitzustellen. Weiterhin ist es Aufgabe der vorliegenden Erfindung ein Verfahren zur Darstellung eines derartigen Kaolins mit reduziertem Gehalt phosphorhaltiger anorganischer Verbindungen zur Verfügung zu stellen. Dieses Verfahren sollte preiswert, einfach, sowie umwelt- und CO₂-schonend sein. Außerdem ist es Aufgabe der Erfindung, für dieses Kaolin, mit reduziertem Gehalt an phosphorhaltigen anorganischen Verbindungen, bzw. mit den aus dem natürlichen Kaolin abgeschiedenen phosphorhaltigen Verbindungen selbst neue, bislang nicht mögliche Anwendungen zu erschließen.

Aus dem Stand der Technik sind als selektive Verfahren zur Mineraltrennung beispielsweise die Flotation und seit jüngerer Zeit auch die selektive Flockung bekannt. Beide Verfahren sind eingehend in der Patentliteratur beschrieben. Im Zusammenhang mit der Kaolinveredelung werden diese Verfahren vor allem zur Abtrennung K-, Fe- oder Ti-haltiger Verunreinigungen, wie beispielsweise Kalifeldspat, Glimmer, Illit, Ilmenit, Anatas, Rutil, Hämatit sowie auch Quarz verwendet. Die Abtrennung der Verunreinigungen dient beispielsweise dazu, die Reinheit des Kaolins zu erhöhen, den Weißgrad zu steigern, rheologische Verbesserungen zu erreichen oder die Abrasion zu reduzieren. Die Reduzierung phosphorhaltiger anorganischer Verbindungen war bislang nicht das Ziel dieser Verfahren und ist nicht als praktikables bzw. rentables Verfahren beschrieben. Insbesondere beschreibt (wie auch wie H.M. Krömer) Hilz M. (1979) in "Die Spurenelemente in Kaolinen, kaolinitischen Tonen und Bentoniten - ihr Verhalten bei Ionenumtauschreaktionen und gegen Säuren" (Doktorarbeit, Technische Universität, München), dass phosphorhaltige Verbindungen nur zum Teil mittels Magnetscheidung entfernt werden können.

Entgegen dieser aus dem Stand der Technik bekannten Meinung wurde überraschender Weise gefunden, dass eine durch derartige Verfahren nach geeigneter Vorbereitung des Kaolins bzw. des Kaolinits eine weitergehende Reduzierung des Gehaltes phosphorhaltiger Verbindungen möglich ist. Insbesondere ist dies durch neue Verfahren und/oder mit Unterstützung durch mechanische Prozesse möglich, welche mit den Trennprozessen gekoppelt sein können.

Die erfindungsgemäße Aufgabe wird daher durch ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit gelöst, wobei in einem ersten Verfahrensschritt ein Kaolin- und/oder Kaolinit-Rohmaterial mechanisch unter Aufwendung starker Scherkräfte mittels Extrusion, Delaminierung, Kavitation, Nassmahlung, Trockenmahlung, Attrition und/oder anderer Verfahren aufgearbeitet wird, und in einem darauffolgenden Verfahrensschritt mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion getrennt wird.

Durch die mechanische Behandlung des Kaolin- und/oder Kaolinit-Rohmaterials in Verfahren die starke Scherkräfte ausüben wird in dem folgenden Trennprozess eine Separation in eine an anorganischen phosphorhaltigen Verbindungen angereicherte Fraktion und eine an anorganischen phosphorhaltigen Verbindungen abgereicherte Fraktion erreicht, wie sie aus dem Stand der Technik nicht bekannt ist und welche nach den aus der Literatur bekannten Untersuchungsergebnissen nicht zu erwarten gewesen wäre. Durch den an das scherkraftapplizierende Verfahren folgenden Prozessschritt der Flotation, selektiver Flockung, Magnetscheidung, Zyklontrennung, Zentrifugentrennung, Trennung mittels Separatoren, z.B. Düsenseparatoren, Dekantieren, und/oder anderer Verfahren ist es möglich, besonders an anorganischen phosphorhaltigen Verbindungen an- bzw. abgereicherte Fraktionen herzustellen.

In einer besonders bevorzugten Ausführungsform des Verfahrens zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit, weist nach der Trennung die an der anorganischen phosphorhaltigen Verbindungen abgereicherten Fraktion einen Anteil der anorganischen phosphorhaltigen Verbindungen von < 75%, bevorzugt < 50%, besonders bevorzugt < 30% bezogen auf den Phosphorgehalt des Ausgangsmaterials auf. Eine derartige Reinheit bzw. Abreicherung des Anteils der anorganischen phosphorhaltigen Verbindungen ist aus dem Stand der Technik nicht bekannt, bzw. nicht ohne die Vorbehandlung mittels Scherkraftintensiver Verfahren erreichbar.

Bevorzugt ist ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit, wobei nach der Trennung der Anteil der anorganischen phosphorhaltigen Verbindungen in der an der anorganischen phosphorhaltigen Verbindungen abgereicherten Fraktion derart reduziert ist, dass diese einen Phosphorgehalt von < 3000 mg/kg, bevorzugt < 1000 mg/kg, besonders bevorzugt < 300 mg/kg aufweist. Der Phosphorgehalt der an der anorganischen phosphorhaltigen Verbindungen abgereicherten Fraktion kann demnach nicht nur um einen bestimmten Prozentwert abgesenkt werden, sondern abhängig vom Ausgangsmaterial und je nach Verweildauer und Aufwand des Trennverfahrens bis untere einen bestimmten Sollwert abgesenkt werden.

Insbesondere ist ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit bevorzugt, bei welchem nach der mechanischen Aufbereitung der Masseanteil an Partikeln der Korngröße < 6 µm (gem. Sedimentationsmethode) > 50%, bevorzugt > 60%, bevorzugt > 70%, besonders bevorzugt > 80% beträgt und/oder nach der mechanischen Aufbereitung der Masseanteil an Partikeln der Korngröße < 4 µm (gem. Sedimentationsmethode) > 25%, bevorzugt > 35%, bevorzugt > 45%, besonders bevorzugt > 55% beträgt. Durch eine derartige Korngrößenverteilung ist eine besonders effiziente anschließende Trennung in die an anorganischen phosphorhaltigen Verbindungen angereicherte Fraktion und in die an anorganischen phosphorhaltigen Verbindungen abgereicherte Fraktion möglich.

Besonders vorteilhaft ist dieses Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit, wenn die mechanischen Aufbereitung in einem Attritor bei einem Feststoffgehalt von 200 - 500 g/l, bevorzugt 250 - 400 g/l, besonders bevorzugt 300 - 350 g/l bei einem Durchsatz von > 1 m³/h, bevorzugt > 2,5 m³/h, bevorzugt ≥ 4 m³/h erfolgt. Dieses Verfahren ermöglicht ein kostengünstiges und schnelles Aufbringen der benötigten Scherkräfte und somit einen hohen Durchsatz.

Alternativ zum Attritor kann eine mechanische Aufbereitung auch mit einem Extruder erfolgen wenn hierbei Kaolin mit einer Feuchtigkeit von 10-45 Ma-%, bevorzugt 15-40 Ma-% und besonders bevorzugt mit 20-35 Ma-% verwendet wird und die Extrusion bei einem Druck von 1-80 bar, bevorzugt 3-70 bar und besonders bevorzugt 5-60 bar erfolgt.

Zur anschließenden Trennung haben sich verschiedene Möglichkeiten als geeignet erwiesen. Beispielsweise erfolgt in einem bevorzugten Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit die Trennung in eine an anorganischen phosphorhaltigen Verbindungen angereicherte Fraktion und eine an anorganischen phosphorhaltigen Verbindungen abgereicherte Fraktion mittels Magnetscheidung, wobei Kaolin- und/oder Kaolinit in Form einer Suspension mit einem pH-Wert von 7 - 10, bevorzugt von 8 - 9 und einem Feststoffgehalt > 50 g/l, bevorzugt 80 - 120 g/l, besonders bevorzugt 100 g/l sowie bevorzugt unter Zugabe eines oder mehrerer Dispergiermittel, bevorzugt Acrylate in einer Menge von 0,00001-1,0 Ma-%, bevorzugt in einer Menge von 0,00005-0,5 Ma-% bezogen auf Trockensubstanz Kaolin bei einem Durchsatz von > 0,5 l/min, bevorzugt > 0,9 l/min, bevorzugt ≥ 1 l/min eingebracht wird und die Magnetscheidung bei einer magnetischen Flussdichte von > 0,25 T, bevorzugt > 1 T, besonders bevorzugt ≥ 2 T erfolgt.

Aber auch andere Verfahren sind möglich. So stellt ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit bei welchem die Trennung in eine an anorganischen phosphorhaltigen Verbindungen angereicherte Fraktion und eine an anorganischen phosphorhaltigen Verbindungen abgereicherte Fraktion durch selektive Flockung erfolgt, wobei Kaolin- und/oder Kaolinit in Form einer Suspension mit einem pH-Wert von 7 - 10, bevorzugt von 8,5 - 9,5 und einem Feststoffgehalt von 1 - 50 Ma.-%, bevorzugt 5 - 25 Ma.-%, besonders bevorzugt 10 - 15 Ma.-% vorliegt und diesem ein Flockungsmittel, bevorzugt ein Salz, bevorzugt ein Ammoniumsalz, besonders bevorzugt NH₄Cl in einem Mengenanteil von 100 - 2000 ppm, bevorzugt von 150 - 1000 ppm, besonders bevorzugt von 200 - 500 ppm und/oder ein Flockungshilfsmittel, bevorzugt ein Polymer, besonders bevorzugt ein organisches, hochmolekulares Polyelektrolyt, besonders bevorzugt ein Polyacrylamid (z.B. eine 0,1 Ma-%-ige Lösung) in einer Menge von < 100 ml, bevorzugt < 50 ml, besonders bevorzugt von 2 - 40 ml zugesetzt wird, eine weitere bevorzugte Möglichkeit der Trennung dar.

Weiterhin ist ein Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit bevorzugt, bei welchem die Trennung in eine an anorganischen phosphorhaltigen Verbindungen angereicherte Fraktion und eine an anorganischen phosphorhaltigen Verbindungen abgereicherte Fraktion durch Zentrifugation erfolgt, wobei Kaolin- und/oder Kaolinit in Form einer Suspension mit einem Feststoffgehalt von 20 - 200 g/l, bevorzugt 50 - 100 g/l, besonders bevorzugt 60 - 80 g/l vorliegt und die Zentrifugation bei einer Drehzahl von 500-25.000, bevorzugt 1.000-20.000, besonders bevorzugt von 2.000-15.000 U/min erfolgt.

Bevorzugt findet eine nach einem der genannten Verfahren hergestellten, an phosphorhaltigen Verbindungen angereicherte Fraktion Verwendung, insbesondere zur Isolierung und/oder Gewinnung von Selten-Erd-Elementen. Aber auch andere Verwendungen sind möglich.

Ein weiterer wesentlicher Aspekt der Erfindung ist ein Kaolin und/oder Kaolinit mit reduziertem Gehalt an Phosphor bzw. anorganischer phosphorhaltiger Verbindungen, wobei der Kaolin und/oder der Kaolinit aus einem phosphorhaltigem Kaolin- und/oder Kaolinit-Rohmaterial, bevorzugt einem Tonmineral und/oder einer Tonerde natürlichen Ursprungs durch einen mindestens zweistufigen Prozess herstellbar ist, wobei der Prozess eine mechanische Aufarbeitung unter Ausübung starker Scherkräfte, insbesondere durch Extrusion, Delaminierung, Kavitation, Nassmahlung, Trockenmahlung, Attrition und/oder andere Aufarbeitungen und eine auf die mechanische Aufarbeitung folgende Trennung mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion umfasst. Ein derartiges Kaolin und/oder Kaolinit ist aus einer Vielzahl von Rohmaterialien verschiedener natürlicher Lagerstädten herstellbar und zeichnet sich durch seine besonders hohe Reinheit aus. Insbesondere die Farbe kann einen besonders hohen Weißgrad erreichen. Dies resultiert u.a. aus der Abtrennung der phosphorhaltigen Verbindungen, welche z.B. aus Fe enthalten können, welches zu einer Verfärbung beitragen kann.

Bevorzugt weist ein Kaolin und/oder Kaolinit mit reduziertem Gehalt an Phosphor bzw. anorganischer phosphorhaltiger Verbindungen nach der Trennung einen Anteil der anorganischen phosphorhaltigen Verbindungen von < 75%, bevorzugt < 50%, besonders bevorzugt < 30% bezogen auf den Phosphorgehalt des Ausgangsmaterials auf. Dieser geringe Phosphorgehalt garantiert ein besonders breites Anwendungsspektrum für einen derartigen Kaolin und/oder Kaolinit.

Bevorzugt ist ein Kaolin und/oder Kaolinit mit reduziertem Gehalt an Phosphor bzw. anorganischer phosphorhaltiger Verbindungen, wobei der Kaolin und/oder der Kaolinit nach der mechanischen Aufbereitung einen Masseanteil an Partikeln der Korngröße < 6 µm (gem. nach Sedimentationsmethode) > 50%, bevorzugt > 60%, bevorzugt > 70%, besonders bevorzugt > 80% aufweist und/oder nach der mechanischen Aufbereitung der Masseanteil an Partikeln der Korngröße < 4 µm (gem. nach Sedimentationsmethode) > 25%, bevorzugt > 35%, bevorzugt > 45%, besonders bevorzugt > 55% aufweist. Diese Partikelgrößenverteilung ist besonders gut für folgende Trennprozesse geeignet. So wird bei diesen Partikelgrößen beispielsweise einen rentabler Kompromiss zwischen Aufwand der mechanischen Aufarbeitung unter Einsatz hoher Scherkräfte und Trennbarkeit erreicht.

Weiterhin ist ein Kaolin und/oder Kaolinit mit reduziertem Gehalt an Phosphor bzw. anorganischer phosphorhaltiger Verbindungen bevorzugt, wobei der Kaolin und/oder der Kaolinit mittels Magnetscheidung bei einer magnetischen Flussdichte von > 0,25 T, bevorzugt > 1 T, besonders bevorzugt ≥ 2 T und bei einem Durchsatz von > 0,5 l/min, bevorzugt > 0,9 l/min, bevorzugt ≥ 1 l/min aus einer Suspension von einer phosphorreichen Fraktion trennbar ist, wobei die Suspension einen pH-Wert von 7 - 10, bevorzugt von 8 - 9 und einen Feststoffgehalt > 50 g/l, bevorzugt 80 - 120 g/l, besonders bevorzugt 100 g/l aufweist sowie bevorzugt unter Verwendung eines oder mehrerer Dispergiermittel, bevorzugt Acrylate in einer Menge von 0,00001-1,0 Ma-%, bevorzugt in einer Menge von 0,00005-0,5 Ma-% bezogen auf Trockensubstanz Kaolin getrennt wird.

Außerdem ist ein Kaolin und/oder Kaolinit mit reduziertem Gehalt an Phosphor bzw. anorganischer phosphorhaltiger Verbindungen bevorzugt, welcher mittels selektiver Flockung aus einer Suspension mit einem pH-Wert von 7 - 10, bevorzugt von 8,5 - 9,5 und einem Feststoffgehalt von 1 - 50 Ma.-%, bevorzugt 5 - 25 Ma.-%, besonders bevorzugt 10 - 15 Ma.-%, welche weiterhin ein Flockungsmittel, bevorzugt ein Salz, bevorzugt ein Ammoniumsalz, besonders bevorzugt NH₄Cl in einem Mengenanteil von 100 - 2000 ppm, bevorzugt von 150 - 1000 ppm, besonders bevorzugt von 200 - 500 ppm und/oder ein Flockungshilfsmittel, bevorzugt ein Polymer, besonders bevorzugt ein organisches, hochmolekulares Polyelektrolyt, besonders bevorzugt ein Polyacrylamid (z.B. eine 0,1 Ma-%-ige Lösung) in einer Menge von < 100 ml, bevorzugt < 50 ml, besonders bevorzugt von 2 - 40 ml aufweist, von einer phosphorreichen Fraktion trennbar ist.

Weiterhin ist ein Kaolin und/oder Kaolinit mit reduziertem Gehalt an Phosphor bzw. anorganischer phosphorhaltiger Verbindungen bevorzugt, wobei der Kaolin und/oder der Kaolinit durch Zentrifugation einer Suspension mit einem Feststoffgehalt von 20 - 200 g/l, bevorzugt 50 - 100 g/l, besonders bevorzugt 60 - 80 g/l bei einer Drehzahl von 500-25.000, bevorzugt 1.000-20.000, besonders bevorzugt von 2.000-15.000 U/min von einer phosphorreichen Fraktion trennbar ist.

Derartige Kaoline und/oder Kaolinite zeichnen sich neben dem geringen Gehalt an Phosphor bzw. anorganischer phosphorhaltiger Verbindungen dadurch aus, dass sie besondere Eigenschaften aufweisen. So sind sie besonders rein, weiß, zeigen besonders vorteihafte rheologische Eigenschaften,

Wie nachfolgende Beispiele zeigen führen im Hinblick auf die Reduzierung phosphorhaltiger anorganischer Verbindungen einzelne oder kombinierte, neue Verfahren und/oder eine Kombinationen neuer Verfahren zusammen mit bereits bekannten Verfahren der mechanischen Kaolinaufbereitung zum Erfolg, wobei die prinzipiellen Verfahren der klassischen Kaolinaufbereitung, insbesondere der Gewinnung und Veredelung beibehalten werden können.

Verfahren der mechanischen Aufbereitung im Sinne dieser Beschreibung, einzeln oder kombiniert, sind vor allem scherende Verfahren wie z.B.:
- Extrusion
- Delaminierung
- Kavitation
- Mahlung, nass und trocken
- Attrition

Nachfolgende Trennverfahren im Sinne dieser Beschreibung können einzeln oder kombiniert zusammen mit einem oder mehreren der oben genannten mechanischen Aufbereitungsverfahren kombiniert werden, z.B.:
- Flotation
- Selektive Flockung
- Magnetscheidung
- Zyklontrennung (grob-fein-Trennung)
- Zentrifugentrennung (grob-fein-Trennung)

### Beispiel 1:

### Kombination aus Extrusion und Magnetscheidung

Die Bedingungen und Ergebnisse der Extrusion sind in Tabelle 2 dargestellt.

**Tabelle 2:**

| **Kaolin Feuchtigkeit: 21-22 Ma-%** | **Druck** | **Platte** | **KG >25 µm** | **KG <6 µm** | **KG <4 µm** | **KG <2 µm** |
|---|---|---|---|---|---|---|
| | bar | mm | Ma-% | Ma-% | Ma-% | Ma-% |
| 0-Probe | - | - | 0,0100 | 92,5 | 82,1 | 56,7 |
| Versuch 1 B (Aufgabematerial. = 0-Probe) | ca. 40 | 4 | 0,0063 | 94 | 85,4 | 64,4 |
| Versuch 2B | ca. 45 | 1 | 0,0037 | 94,3 | 86,8 | 65,9 |
| (Aufgabematerial. = Versuch 1 B) | | | | | | |

| | | | | | | |
|---|---|---|---|---|---|---|
| Platte = Lochplatte, Extruderausgang; Korngröße (KG): Sedimentationsmethode, z.B. Sedigraph | | | | | | |

### Ergebnis:

Durch die Extrusion nimmt der Feinanteil des Materials zu. Dies ist beispielsweise festzustellen durch einen höheren Anteil der Korngröße von < 2 µm oder einen abnehmenden Grobanteil, z.B. von einer Korngröße > 25 µm.

Bedingungen und Ergebnisse der Magnetscheidung (Technikumsmaßstab):
- pH-Wert Suspension: : 8-9
- Feststoffgehalt: : 100 g/l
- Feldstärke: : 2 Tesla
- Durchsatz: : 1 l/min
- Dispergiermittel: : 0,005 Ma-% bezogen auf Trockensubstanz Kaolin

Tabelle 3 zeigt die Änderung des Phosphorgehaltes als Maß für die phosphorhaltigen Verbindungen.

**Tabelle 3:**

| **Material** | **Einheit** | **Phosphorgehalt in mg/kg** |
|---|---|---|
| 0-Probe, original | | 1000 |
| 0-Probe, original, nach Magnetscheidung | | 920 |
| 0-Probe nach Extrusion und Magnetscheidung | | 268 |

### Ergebnis:

Durch die Magnetscheidung ohne weitere mechanische (scherende) Aufbereitung wird eine Reduzierung des Phosphorgehalten (P-Gehaltes) erreicht, was bisher auch bekannt war.

Entgegen der bisherigen Meinung zeigt die zusätzliche mechanische (scherende) Aufbereitung allerdings, dass im Anschluss daran mittels Magnetscheidung eine weitergehende, signifikante Reduzierung des P-Gehaltes möglich wird. Wie der Tabelle 3 zu entnehmen ist, ist eine Reduzierung des Phosphorgehalts auf < 75%, bevorzugt < 50%, besonders bevorzugt < 30% des ursprünglichen Phosphorgehalts möglich.

### Beispiel 2:

### Kombination aus Attrition/Delaminierung/Mahlung und Magnetscheidung

Unter Attrition/Delaminierung/Mahlung wird hier eine scherende Beanspruchung von Kaolin in Suspension durch mechanischen Energieeintrag, z.B. durch Kugelmühlen (z.B. Fa. Netzsch), Attritor- oder vergleichbaren Mühlen und z.B. Al₂O₃-, ZrO₂- oder Quarzsand-Mahlkörper mit angepassten Körnungen, ausgewählt aus einem Bereich von 0,1-5 mm, verstanden.

### Bedingungen und Ergebnisse der Attritormahlung

- - Mahlkörper, Art und Größe: : Zirkonox Aluminiumoxid 1/2 1,6-1,8 mm, 1/2 1,8-2,0 mm
- - Masse Mahlkörper: : ca. 4 - 4,5 t
- - Drehzahl: : 160 U/min
- - Art Rotor: : 2 x 4 Rührarme in Kreuzform ca. 0,5 m in der Höhe versetzt, Rund d = ca. 14 - 16 mm mit Hartgummi überzogen
- - Stromaufnahme: : 280 - 300 A
- - Feststoffgehalt: : 300 - 350 g/l
- - Durchsatz: : 4 m³/h
- - pH-Wert: : neutral
- - Mahlraumgeometrie: : 2100 mm Durchmesser, Höhe 2000 mm, 8-eckig

Tabelle 4 zeigt die Massenanteile der Korngrößen im Bereich von 0 bis größer 20 µm vor und nach der Attritormahlung.

**Tabelle 4:**

| | **Aufgabe Attritor** | **Produkt Attritor** |
|---|---|---|
| **[µm]** | **Ma.-%** | **Ma.-%** |
| >20 | 0,3 | 0 |
| 10-20 | 14,5 | 1,9 |
| 6-10 | 24,4 | 4,8 |
| 4-6 | 16,2 | 8,1 |
| 2-4 | 22,3 | 24,7 |
| 1-2 | 12,5 | 27,8 |
| 0-1 | 9,8 | 32,7 |

### Ergebnis:

Durch die Attritormahlung nimmt der Feinanteil zu. Dies ist festzustellen z.B. durch einen höheren Korngrößenanteil von < 2 µm oder den abnehmenden Grobanteil.

Bedingungen und Ergebnisse der Magnetscheidung (Technikumsmaßstab)
- pH-Wert Suspension: : 8 - 9
- Feststoffgehalt: : 100 g/l
- Feldstärke: : 2 Tesla
- Durchsatz: : 1 l/min
- Dispergiermittel: : 0,005 Ma-% bezogen auf Trockensubstanz Kaolin

In Tabelle 5 ist die Änderung des Phosphorgehaltes als Maß für die phosphorhaltigen Verbindungen dargestellt.

**Tabelle 5:**

| **Material** | **Einheit** | **Phosphorgehalt in mg/kg** |
|---|---|---|
| Attritor, Aufgabe | mg/kg | 1700 |
| Attritor, Aufgabe, nach Magnetscheidung | mg/kg | 1540 |
| Attritor, Produkt, nach Magnetscheidung | mg/kg | 1020 |

### Ergebnis:

Durch die Magnetscheidung ohne weitere mechanische (scherende) Aufbereitung wird eine Reduzierung des P-Gehaltes erreicht, was bisher auch bekannt war. Entgegen der bisherigen Meinung zeigt allerdings die zusätzliche mechanische (scherende) Aufbereitung, beispielsweise mittels Attritor, dass im Anschluss daran mittels Magnetscheidung eine weitergehende Reduzierung des P-Gehaltes möglich wird. Der Gehalt an Phosphor ist jeweils als P₂O₅ bestimmt worden.

### Beispiel 3:

### Selektive Flockung

Unter selektiver Flockung wird hier allgemein die Trennung von Mineralgemischen durch Zugabe selektiv wirkender Additive bei bestimmten Versuchsbedingungen verstanden. Es kommt dabei zu einer selektiven Trennung in eine sich absetzende, schwerere und in eine sich in Schwebe befindliche, leichtere Phase, welche jeweils durch eine unterschiedliche Zusammensetzung charakterisiert sind. Diese selektive Trennung lässt sich prinzipiell auch auf die Flotation übertragen.
- Dispergiermitel: : Nalco N 77322 (0,1 Ma-%) und Ammoniumchlorid (20 Ma-%)
- P₂O₅-Gehalt, Kaolin, Aufgabe: : 4500 mg/kg

Tabelle 6 zeigt den Gehalt an P₂O₅ der leichteren, oberen und der schwereren, unteren Phase.

**Tabelle 6:**

| Nr. | Konzentr. NH₄Cl, ppm | pH-Wert | TS Kaolin *) | Polymer 0,1 Ma-% Lösung | Bemerkung | P₂O₅ Phase oben | P₂O₅ Phase unten |
|---|---|---|---|---|---|---|---|
| | ppm | | Ma-% | ml | | mg/kg | mg/kg |
| 1 | 500 | 9,1 | 10 | 2 | Ca. 40 Ma-% sedimentiert | 4700 | 2000 |
| 2 | 1000 | 9,0 | 10 | 2 | Gute Trennung | 5000 | 2200 |
| 3 | 1000 | 9,0 | 15 | 6 | Ca. 70 Ma-% sedimentiert | 4300 | 2500 |
| 4 | 200 | 9,0 | 10 | 40 | Trennung nach 3 min. | 22600 | 2400 |

| | | | | | | | |
|---|---|---|---|---|---|---|---|
| *) = Trockensubstanz (TS) der Kaolinsuspension | | | | | | | |

### Ergebnis:

Durch die selektive Flockung kann bereits alleine, also ohne zusätzliche mechanische (scherende) Aufbereitung eine Stofftrennung und dadurch eine Reduzierung des P-Gehaltes erreicht werden.

Davon ausgehend, dass durch die mechanische (scherende) Beanspruchung eine weitergehende Freilegung phosphorhaltiger Verbindungen erzielt wird (analog Beispiel 1 und 2) ist damit zu rechnen, dass durch die Kombination scherender Verfahren und selektiver Flockung eine noch weitergehende Reduzierung phosphorhaltiger Verbindungen erreicht wird. Dies ist in vollem Umfang auch auf die Flotation übertragbar.

### Beispiel 4:

### Fraktionierung, mit und ohne vorhergehenden Energieeintrag

Unter Fraktionierung wird hier allgemein die Trennung von Mineralgemischen in eine gröbere und eine feinere Fraktion verstanden. Dies kann beispielsweise geschehen mit Hydrozyklonen, Zentrifugen oder Dekantern oder mittels Düsenseparatoren. Der Energieeintrag kann erfolgen mittels Extrusion, Attrition oder Kavitation und wird hier am Beispiel Attrition beschrieben.

Bedingungen und Ergebnisse der Attritormahlung
- - Mahlkörper, Art und Größe :: Zirkonox Aluminiumoxid 1/2 1,6-1,8 mm, 1/2 1,8-2,0 mm
- - Masse Mahlkörper :: ca. 4 - 4,5 t
- - Drehzahl :: 160 U/min
- - Art Rotor :: 2 x 4 Rührarme in Kreuzform ca. 0,5 m in der Höhe versetzt, Rund d = ca. 14 - 16 mm mit Hartgummi überzogen
- - Stromaufnahme :: 280 - 300 A
- - Feststoffgehalt :: 300 - 350 g/l
- - Durchsatz :: 4 m³/h
- - pH-Wert :: neutral
- - Mahlraumgeometrie :: 2100 mm Durchmesser, Höhe 2000 mm, 8-eckig

Tabelle 7 zeigt die Massenanteile der Korngrößen im Bereich von 0 bis größer 20 µm vor und nach der Attritormahlung.

**Tabelle 7:**

| | **Aufgabe Attritor** | **Produkt Attritor** |
|---|---|---|
| **[µm]** | **Ma.-%** | **Ma.-%** |
| >20 | 0,3 | 0 |
| 10-20 | 14,5 | 1,9 |
| 6-10 | 24,4 | 4,8 |
| 4-6 | 16,2 | 8,1 |
| 2-4 | 22,3 | 24,7 |
| 1-2 | 12,5 | 27,8 |
| 0-1 | 9,8 | 32,7 |

Die Fraktionierung wurde sowohl am Aufgabematerial als auch an der Suspension nach Attitorbehandlung durchgeführt. Dazu wurde eine Zentrifuge mit sehr hoher Drehzahl verwendet. Der Feststoffgehalt ist auf 70 g/l eingestellt wurden. Der Gehalt an P₂O₅ wurde im Fein- als auch im Grobanteil sowohl a) im Aufgabematerial (ohne Scherung) als auch b) im Produkt (nach Scherung) bestimmt.

Tabelle 8 zeigt die Veränderung im Gehalt an < 2 µm sowie den P₂O₅ Gehalt

**Tabelle 8:**

| **[µm]** | **Aufgabe Attritor** | | **Produkt Attritor** | |
|---|---|---|---|---|
| | **grob** | **fein** | **grob** | **fein** |
| | **Ma.-%** | **Ma.-%** | **Ma.-%** | **Ma.-%** |
| 1-2 µm | 9 | 20 | 12,5 | 39 |
| 0-1 µm | 5 | 15 | 9,8 | 44 |
| P₂O₅ mg/kg | 1500 | 1900 | 1300 | 2500 |

### Ergebnis:

Durch alleinige Fraktionierung ohne vorhergehende mechanische (scherende) Aufbereitung wird eine Reduzierung des P-Gehaltes im Grobgut bzw. eine Anreicherung in Feingut erreicht. Entgegen der bisherigen Meinung zeigt allerdings die zusätzliche mechanische (scherende) Aufbereitung, dass im Anschluss daran mittels Fraktionierung eine weitergehende Reduzierung des P-Gehaltes im Grobgut bzw. eine Anreicherung im Feingut möglich ist. Die jetzt verfügbaren Kaoline mit reduziertem Anteil phosphorhaltiger anorganischer Verbindungen und deren Folgeprodukte, insbesondere die teil- und vollkalzinierten Kaoline können jetzt in neuen Applikation der Branchen Papier, Farbe und Lack, Polymere, Bau, Keramik, Medizin und der Lebensmittelindustrie zum Einsatz kommen, was vorher aufgrund gegebener Grenzwerte für die in phosphorhaltigen Verbindungen enthaltenen Elemente nicht immer der Fall war.

Weiterhin können die abgetrennten Fraktionen mit erhöhtem Anteil phosphorhaltiger anorganischer Verbindungen vollkommen neuen Anwendungen zugeführt werden, da diese nennenswerte andere Materialien enthalten, beispielsweise die sogenannten Selten-Erd-Elemente. Zu deren Gewinnung können die phosphorhaltigen, anorganischen Verbindungen eine oder mehrere weitere physikalische und/oder chemische Reinigungsstufen durchlaufen, bevor das daraus resultierende Konzentrat mittels in der Regel chemischer Verfahren in Lösung gebracht und anschließend in die einzelnen Elemente getrennt werden.

## Patentansprüche

1. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit,
**dadurch gekennzeichnet, dass**
in einem ersten Verfahrensschritt ein Kaolin- und/oder Kaolinit-Rohmaterial mechanisch unter Aufwendung starker Scherkräfte mittels Extrusion, Delaminierung, Kavitation, Nassmahlung, Trockenmahlung, Attrition und/oder anderer Verfahren aufgearbeitet wird, und in einem darauffolgenden Verfahrensschritt mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion getrennt wird.

2. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach Anspruch 1,
**dadurch gekennzeichnet, dass**
nach der Trennung die an der anorganischen phosphorhaltigen Verbindungen abgereicherten Fraktion auf einen Anteil der anorganischen phosphorhaltigen Verbindungen von < 75%, bevorzugt < 50%, besonders bevorzugt < 30% bezogen auf den Phosphorgehalt des Ausgangsmaterials auf.

3. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach Anspruch 1 oder 2,
**dadurch gekennzeichnet, dass**
nach der Trennung der Anteil der anorganischen phosphorhaltigen Verbindungen in der an der anorganischen phosphorhaltigen Verbindungen abgereicherten Fraktion derart reduziert ist, dass diese einen Phosphorgehalt von <3000 mg/kg, bevorzugt < 1000 mg/kg, besonders bevorzugt < 300 mg/kg aufweist.

4. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der Ansprüche 1 - 3,
**dadurch gekennzeichnet, dass**
nach der mechanischen Aufbereitung der Masseanteil an Partikeln der Korngröße < 6 µm (gem. Sedimentationsmethode) > 50%, bevorzugt > 60%, bevorzugt > 70%, besonders bevorzugt > 80% beträgt und/oder nach der mechanischen Aufbereitung der Masseanteil an Partikeln der Korngröße < 4 µm (gem. Sedimentationsmethode) > 25%, bevorzugt > 35%, bevorzugt > 45%, besonders bevorzugt > 55% beträgt.

5. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der vorangegangenen Ansprüche,
**dadurch gekennzeichnet, dass**
die mechanischen Aufbereitung in einem Attritor bei einem Feststoffgehalt von 200 - 500 g/l, bevorzugt 250 - 400 g/l, besonders bevorzugt 300 - 350 g/l bei einem Durchsatz von > 1 m³/h, bevorzugt > 2,5 m³/h, bevorzugt ≥ 4 m³/h erfolgt.

6. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der vorangegangenen Ansprüche,
**dadurch gekennzeichnet, dass**
die mechanischen Aufbereitung von Kaolin mit einer Feuchtigkeit von 10-45 Ma-%, bevorzugt 15-40 Ma-% und besonders bevorzugt mit 20-35 Ma-% in einem Extruder erfolgt, wobei die Extrusion bei einem Druck von 1-80 bar, bevorzugt 3-70 bar und besonders bevorzugt 5-60 bar erfolgt.

7. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der vorangegangenen Ansprüche,
**dadurch gekennzeichnet, dass**
die Trennung in eine an anorganischen phosphorhaltigen Verbindungen angereicherte Fraktion und eine an anorganischen phosphorhaltigen Verbindungen abgereicherte Fraktion mittels Magnetscheidung erfolgt, wobei Kaolin- und/oder Kaolinit in Form einer Suspension mit einem pH-Wert von 7 - 10, bevorzugt von 8 - 9 und einem Feststoffgehalt > 50 g/l, bevorzugt 80 - 120 g/l, besonders bevorzugt 100 g/l sowie Zugabe eines oder mehrerer Dispergiermittel, bevorzugt Acrylate in einer Menge von 0,00001-1,0 Ma-%, bevorzugt in einer Menge von 0,00005-0,5 Ma-% bezogen auf Trockensubstanz Kaolin bei einem Durchsatz von > 0,5 l/min, bevorzugt > 0,9 l/min, bevorzugt ≥ 1 l/min eingebracht wird und die Magnetscheidung bei einer magnetischen Flussdichte von > 0,25 T, bevorzugt > 1 T, besonders bevorzugt ≥ 2 T erfolgt.

8. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der vorangegangenen Ansprüche,
**dadurch gekennzeichnet, dass**
die Trennung in eine an anorganischen phosphorhaltigen Verbindungen angereicherte Fraktion und eine an anorganischen phosphorhaltigen Verbindungen abgereicherte Fraktion durch selektive Flockung erfolgt, wobei Kaolin- und/oder Kaolinit in Form einer Suspension mit einem pH-Wert von 7 - 10, bevorzugt von 8,5 - 9,5 und einem Feststoffgehalt von 1 - 50 Ma.-%, bevorzugt 5 - 25 Ma.-%, besonders bevorzugt 10 - 15 Ma.-% vorliegt und diesem ein Flockungsmittel, bevorzugt ein Salz, bevorzugt ein Ammoniumsalz, besonders bevorzugt NH₄Cl in einem Mengenanteil von 100 - 2000 ppm, bevorzugt von 150 - 1000 ppm, besonders bevorzugt von 200 - 500 ppm und/oder ein Flockungshilfsmittel, bevorzugt ein Polymer, besonders bevorzugt ein organisches, hochmolekulares Polyelektrolyt, besonders bevorzugt ein Polyacrylamid (bevorzugt eine 0,1-Ma-%-ige Lösung) in einer Menge von < 100 ml, bevorzugt < 50 ml, besonders bevorzugt von 2 - 40 ml zugesetzt wird.

9. Verfahren zur Reduzierung des Gehalts an Phosphor bzw. anorganischer phosphorhaltiger Verbindungen in Kaolin und/oder Kaolinit und/oder zur Gewinnung angereicherter anorganischer phosphorhaltiger Verbindungen aus Kaolin und/oder Kaolinit nach einem der vorangegangenen Ansprüche,
**dadurch gekennzeichnet, dass**
die Trennung in eine an anorganischen phosphorhaltigen Verbindungen angereicherte Fraktion und eine an anorganischen phosphorhaltigen Verbindungen abgereicherte Fraktion durch Zentrifugation erfolgt, wobei Kaolin- und/oder Kaolinit in Form einer Suspension mit einem Feststoffgehalt von 20 - 200 g/l, bevorzugt 50 - 100 g/l, besonders bevorzugt 60 - 80 g/l vorliegt und die Zentrifugation bei einer Drehzahl von 500-25.000, bevorzugt 1.000-20.000, besonders bevorzugt von 2.000-15.000 U/min erfolgt.

10. Verwendung einer nach einem der Verfahren nach einem der Ansprüche 1 - 9 hergestellten an phosphorhaltigen Verbindungen angereicherter Fraktion, insbesondere zur Isolierung und/oder Gewinnung von Selten-Erd-Elementen und/oder Verwendung einer nach einem der Verfahren nach einem der Ansprüche 1 - 9 hergestellten an phosphorhaltigen Verbindungen abgereicherter Fraktion, insbesondere in Papier-, Farben- und Kunststoffanwendungen z.B. im Lebensmittelbereich.

11. Kaolin und/oder Kaolinit mit reduziertem Gehalt an Phosphor bzw. anorganischer phosphorhaltiger Verbindungen,
**dadurch gekennzeichnet, dass**
der Kaolin und/oder der Kaolinit aus einem phosphorhaltigem Kaolin- und/oder Kaolinit-Rohmaterial, bevorzugt einem Tonmineral und/oder einer Tonerde natürlichen Ursprungs durch einen mindestens zweistufigen Prozess herstellbar ist, wobei der Prozess eine mechanische Aufarbeitung unter Ausübung starker Scherkräfte, insbesondere durch Extrusion, Delaminierung, Kavitation, Nassmahlung, Trockenmahlung, Attrition und/oder andere Aufarbeitungen und eine auf die mechanische Aufarbeitung folgende Trennung mittels Flotation, selektiver Flockung, Magnetscheidung, Zyklontrennung, Zentrifugentrennung, Trennung mittels Separatoren, z.B. Düsenseparatoren, Dekantieren, und/oder anderer Verfahren in eine an anorganischen phosphorhaltigen Verbindungen angereicherte Fraktion und eine an anorganischen phosphorhaltigen Verbindungen abgereicherte Fraktion umfasst.

12. Kaolin und/oder Kaolinit mit reduziertem Gehalt an Phosphor bzw. anorganischer phosphorhaltiger Verbindungen nach Anspruch 11,
**dadurch gekennzeichnet, dass**
der Kaolin und/oder der Kaolinit nach der Trennung einen Anteil der anorganischen phosphorhaltigen Verbindungen von < 75%, bevorzugt < 50%, besonders bevorzugt < 30% bezogen auf den Phosphorgehalt des Ausgangsmaterials aufweist.

13. Kaolin und/oder Kaolinit mit reduziertem Gehalt an Phosphor bzw. anorganischer phosphorhaltiger Verbindungen nach einem der Ansprüche 11 oder 12,
**dadurch gekennzeichnet, dass**
der Kaolin und/oder der Kaolinit nach der mechanischen Aufbereitung einen Masseanteil an Partikeln der Korngröße < 6 µm (gem. nach Sedimentationsmethode) > 50%, bevorzugt > 60%, bevorzugt > 70%, besonders bevorzugt > 80% aufweist und/oder nach der mechanischen Aufbereitung der Masseanteil an Partikeln der Korngröße < 4 µm (gem. nach Sedimentationsmethode) > 25%, bevorzugt > 35%, bevorzugt > 45%, besonders bevorzugt > 55% aufweist.

14. Kaolin und/oder Kaolinit mit reduziertem Gehalt an Phosphor bzw. anorganischer phosphorhaltiger Verbindungen nach einem der Ansprüche 11 - 13,
**dadurch gekennzeichnet, dass**
der Kaolin und/oder der Kaolinit mittels Magnetscheidung bei einer magnetischen Flussdichte von > 0,25 T, bevorzugt > 1 T, besonders bevorzugt ≥ 2 T und bei einem Durchsatz von > 0,5 l/min, bevorzugt > 0,9 l/min, levorzugt ≥ 1 l/min aus einer Suspension von einer phosphorreichen Fraktion trennbar ist, wobei die Suspension einen pH-Wert von 7 - 10, bevorzugt von 8 - 9 und einen Feststoffgehalt > 50 g/l, bevorzugt 80 - 120 g/l, besonders bevorzugt 100 g/l aufweist sowie bevorzugt unter Verwendung eines oder mehrerer Dispergiermittel, bevorzugt Acrylate in einer Menge von 0,00001-1,0 Ma-%, bevorzugt in einer Menge von 0,00005-0,5 Ma-% bezogen auf Trockensubstanz Kaolin getrennt wird.

15. Kaolin und/oder Kaolinit mit reduziertem Gehalt an Phosphor bzw. anorganischer phosphorhaltiger Verbindungen nach einem der Ansprüche 11 - 14,
**dadurch gekennzeichnet, dass**
der Kaolin und/oder der Kaolinit mittels selektiver Flockung aus einer Suspension mit einem pH-Wert von 7 - 10, bevorzugt von 8,5 - 9,5 und einem Feststoffgehalt von 1 - 50 Ma.-%, bevorzugt 5 - 25 Ma.-%, besonders bevorzugt 10 - 15 Ma.-%, welche weiterhin ein Flockungsmittel, bevorzugt ein Salz, bevorzugt ein Ammoniumsalz, besonders bevorzugt NH₄Cl in einem Mengenanteil von 100 - 2000 ppm, bevorzugt von 150 - 1000 ppm, besonders bevorzugt von 200 - 500 ppm und/oder ein Flockungshilfsmittel, bevorzugt ein Polymer, besonders bevorzugt ein organisches, hochmolekulares Polyelektrolyt, besonders bevorzugt ein Polyacrylamid (0,1 Ma-%-ige Lösung) in einer Menge von < 100 ml, bevorzugt < 50 ml, besonders bevorzugt von 2 - 40 ml aufweist, von einer phosphorreichen Fraktion trennbar ist.
